# EUROPEAN PATENT SPECIFICATION

(11) **EP 2 792 501 B1**
(45) Date of publication and mention of the grant of the patent: **26.10.2016**
(21) Application number: 14163962.5
(22) Date of filing: 09.04.2014
(51) Int. Cl.: B44B 5/02, B23P 15/24

(54) **A method and apparatus for manufacturing a minting die**
Verfahren und Vorrichtung zur Herstellung einer Prägematrize
Procédé et appareil de fabrication d'une matrice d'estampage

(30) Priority: 17.04.2013 IT RM20130230
(43) Date of publication of application: 22.10.2014
(73) Proprietor: Istituto Poligrafico e Zecca dello Stato S.p.A., 00138 Roma (RM) (IT)
(72) Inventor: Mascioli, Paolo, 00138 Rome (IT); Carlozzi, Giovanni, 00138 Rome (IT)
(74) Representative: Iannone, Carlo Luigi

(56) References cited:
- US-A- 1 339 363
- US-A- 1 978 330
- US-A- 2 317 861
- US-A- 3 044 394

## Description

### Technical field of the invention

The present invention relates to a method, a device and an apparatus for manufacturing a minting die for the mintage of coins, medals and the like.

### Background

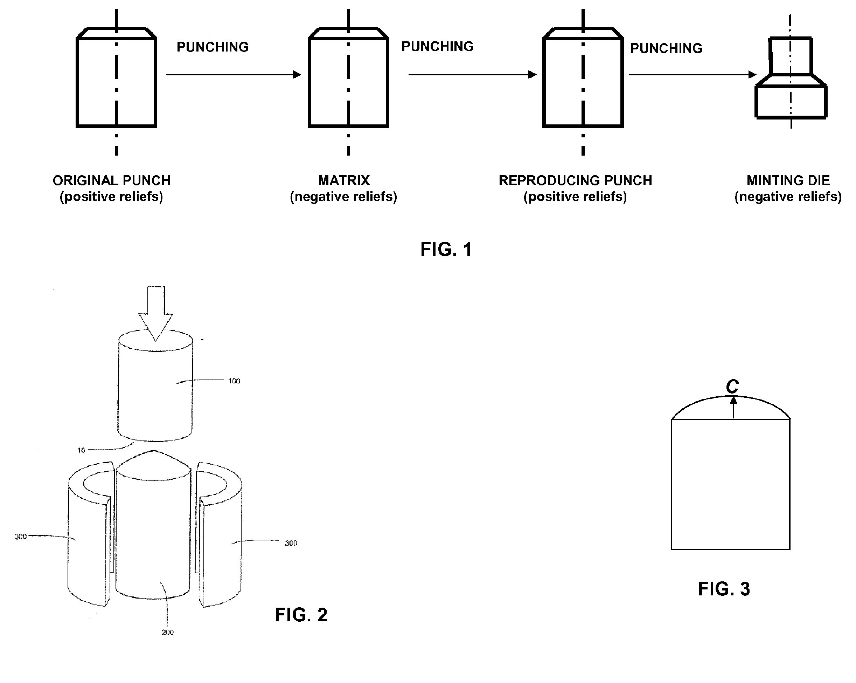

In the state of art, the mintage of a new medal is based upon a process substantially divided into four steps, as schematically shown in Figure 1.

In particular, a first step provides the manufacturing of an original punch, bearing an effigy having the positive reliefs obtained by means of direct carving with a pantograph or equivalent machinery. On such original punch even a wished curvature is obtained, essential for the optimum quality of the final coin.

In a second step, the creation of a matrix is provided, bearing the effigy with negative reliefs, and this by means of cold punching, by means of a oleodynamic/mechanical press, performed with the original punch on the matrix body.

In a third step, a so-called reproducing punch is formed bearing the effigy with positive reliefs, by means of cold punching performed, by means of an oleodynamic/mechanical press, with the matrix on the body of the reproducing punch.

At last, in a fourth step the real minting die is manufactured, bearing the effigy having the negative reliefs and suitable to manufacture, by mintage, the end coin. Even the minting die is obtained by cold punching, by means of an oleodynamic/mechanical press, in this case carried out with the reproducing punch on the body of the minting die. In particular, as shown in Figure 2, the body of the minting die being formed, designated with 200 and typically shaped like a cylinder, is kept within a seat, cylindrical too, defined by a so-called ferrule 300, which seat exactly reproduced the profile of the minting die being formed 200. In such figure, 100 designates the reproducing punch and 10 the effigy born by the latter.

The final curvature of the minting die is shown by simple way of example in Figure 3 and designated with C and it is the arrow measured on the centreline by the modelling plane. As mentioned above, in the coin mintage step the effigy modelled on the minting die is reproduced with a good quality if, with the optimal mintage load, the curvature of the mintage die is suitable to transfer all details of the effigy graphics (under the form of reliefs and/or tracts) on the virgin material of the coin, that is the so-called "round", of different material (for ex. gold, silver, bronze, stainless steel, etc.). In other words, at the stroke end of the minting press, the deformation impressed by the minting die to the round must be so as to bring faithfully all above-mentioned graphics with minting loads so as not to compromise the resistance of the steel of minting dies.

According to the known process, if one has to modify the curvature of the minting die - for example due to an inaccuracy in performing the process or due to wrong planning of the curvature impressed on the original punch - it is necessary repeating all four steps illustrated above. In particular it is necessary to re-start as from the manufacturing of the original punch and this because the curvature of the minting die depends only upon the curvature of such punch.

Therefore, currently the process for producing the minting dies is exclusively of empiric type and it does not allow adjustments or variations avoiding the reiteration of the above-mentioned steps. The need for such reiteration makes the minting process long and expensive.

US 3,044,394 describes a magnetic support for marking dies.

### Summary of the invention

The technical problem placed and solved by the present invention is then to provide a method, a device and an apparatus for manufacturing a minting die allowing to obviate the drawbacks mentioned above with reference to the known art.

Such problem is solved by a device according to claim 1 and a method according to claim 5.

Preferred features of the present invention are subject of the depending claims.

According to the invention, during the operation of punching the body of the minting die being formed by the reproducing punch a plastic deformation of the material of such body, typically steel, is allowed, both in axial direction - that is in the punch motion and abutment direction - and in radial direction - that is orthogonal to the minting die axis. In this way, the final curvature of the minting die at the face receiving the effigy depends upon a joint cause deriving from the axial and radial deformations. Typically, this is obtained by properly shaping the inner surface of a device (the ferrule) divided into three portions holding and locking the body of the minting die being formed during the above-mentioned punching operation. In particular, such surface bears one or more shaped regions wherein a contact with the body of the minting die being formed does not take place, by allowing said transversal deformation.

Consequently, if one wishes to vary the final curvature of the minting die it is no more necessary, as in the known art, to re-start from the step of manufacturing the original punch, but it is sufficient to change the ferrule. In fact, each ferrule confers a different curvature degree on the minting die. Therefore, if during the fourth step described above, the ferrule is replaced by another one, a properly shaped one, a different curvature degree will be obtained. This obviously allows obtaining minting dies with pre-established curvature with high production rate and with a process which results to be much easier and more economic.

Other advantages, features and use modes of the present invention will result evident from the following detailed description of some embodiments, shown by way of example and not for limitative purpose.

### Brief description of the figures

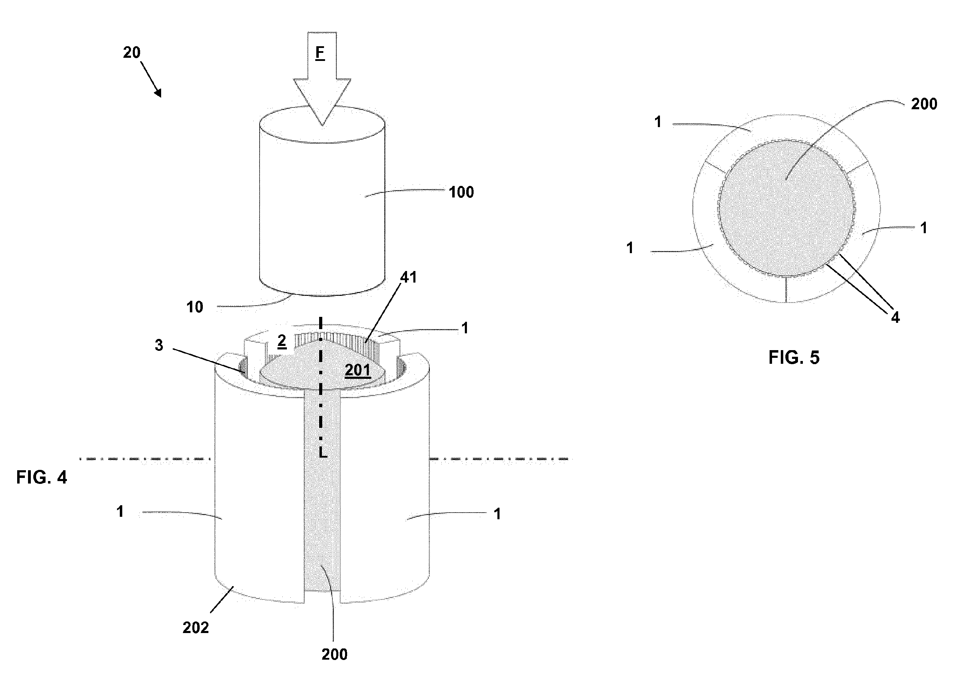

The figures of the enclosed drawings will be referred to, wherein:
▪ Figure 1, already illustrated above, shows schematically the steps of the process for manufacturing a minting die according to the known art;
▪ Figure 2 shows a perspective schematic view of an operation for manufacturing the minting die, still in the known art;
▪ Figure 3 shows a side schematic view of the minting die being formed;
▪ Figure 4 shows a perspective schematic, partially exploded view, of a preferred embodiment of the punching apparatus of the present invention, in a related operation for manufacturing the minting die according to a preferred embodiment of the invention method;
▪ Figure 5 shows a schematic view in transversal section of the apparatus of Figure 4, during the punching of the body of the minting die being formed.

The thicknesses and the curvatures represented in the above-illustrated figures are to be meant as purely exemplifying, are generally magnified and not necessarily shown in proportion.

### Detailed description of preferred embodiments

By referring to Figures 4 and 5, an apparatus for manufacturing a minting die for the mintage of coins, medals and the like is designated as a whole with 20.

The apparatus 20 is suitable to work on a body of the minting die being formed which is designated as a whole with 200. Such body 200 has an axial direction L of prevailing development and a radial face 201 substantially orthogonal to said longitudinal direction L. The body 200 typically is made of steel.

The apparatus 20 comprises a reproducing punch 100 bearing an effigy 10 at its own front face. Typically, the reproducing punch 100 is mounted on a press.

The apparatus 20 further comprises a device 1 suitable to hold the body 200 during the punching operation performed by means of the reproducing punch 100. By purely way of example, in the figures such device 1 has been represented as implemented in three portions which can be mutually coupled and made integral.

Upon use, the apparatus 20 is used in the above-mentioned punching operation, typically cold-performed and generally with an/a oleodynamic/mechanical press, wherein the positive effigy 10 reproduced on the punch 100 is transferred onto the front face 201 of the body 200. To this purpose, the reproducing punch 100 moves in the direction of the arrow F, which corresponds to the above-illustrated axial direction L. Generally, in the punching operation the punch 100 and the body 200 are substantially aligned according to such direction L and the holding device 1 is arranged coaxially to the body 200 still according to the direction L.

The punch 100 abuts on the front face 201 of the body 200 and transfers the effigy 10 thereon, negatively, by exerting a pressing stress substantially directed in the direction L, too.

The device 1 has a containment seat 2 of the body 200 of the minting die being formed within which the latter is held during the above-mentioned punching operation.

The containment seat 2 is defined by an interface surface 3 generally, in use, in contact with the body 200.

The interface surface 3 comprises at least one shaped region 4 defining surface portions, or recesses, which, in use, are not in contact with the body 200. In the present example, such shaped region 4 is made of a plurality of longitudinal grooves, one thereof is designated by way of example with 41.

Still in the present example, the recesses have both axial and radial symmetric arrangement.

In an embodiment variant, one or more recesses with curve profile can be provided.

The presence of the recesses, and generally of the above-mentioned shaped region, during the punching operation impressing the effigy 10 on the body 200, allows both an axial and radial deformation of the body 200.

In fact, the shape of the device 1 leaves to the body 200 not only a degree of plastic deformation freedom in the axial direction L, but also a degree of radial plastic deformation freedom. The balancing between the punching axial stress exerted by the punch 100 (pressure from the top towards the bottom), the restraining reactions of the interface surface 3 at the contact points or areas (the device 1 distributes the punch pressure onto the longitudinal walls of the minting die being formed) and the restraining reaction at the face 202 of the body 200 opposite to the front face 201 determine the size and type of the overall deformation of the minting die.

In this way, as already said above, the final curvature of the minting die is determined by such axial and radial deformation.

In an embodiment example, the holding device 1 allows obtaining, for punching loads ranging from about 150 kN to 12500 kN, curvatures (corresponding to those designated with C in Figure 3) in a range of about 0.01 - 0.50 mm.

## Claims

1. A holding device(1) for holding the body of a minting die (200) being formed for the mintage of coins, medals and the like,
which body (200) has an axial direction (L) of development and a radial face (201) substantially orthogonal to said axial direction (L),
**characterised in that** said holding device(1) is suitable for use in an operation of punching the body of the minting die (200) being formed by a reproducing punch (100) which abuts at the transversal face (201) of such body (200) to transfer upon said face an effigy (10),
which holding device(1) has a containment seat (2) of the body of the minting die (200) being formed, within which containment seat (2) the latter (200) is held during the punching operation,
which containment seat (2) is defined by an interface surface (3) generally in contact, in use, with the body (200) of the minting die being formed,
which interface surface (3) comprises at least one shaped region (4) defining one or more recesses (41) which, in use, are not in contact with the body of the minting die (200) being formed so as to allow both an axial and a radial deformation of the body itself (200) so that the final curvature of the minting die is determined by such axial and radial deformation.

2. The device (1) according to claim 1, wherein said shaped region (4) comprises a plurality of longitudinal grooves (41).

3. The device (1) according to claim 1 or 2, wherein said shaped region (4) comprises a plurality of recesses, preferably with curvilinear profile.

4. An apparatus (20) for manufacturing a minting die, comprising a device (1) according to anyone of the preceding claims and a reproducing punch (100) bearing an effigy (10) to be transferred upon the body of the minting die (200) being formed.

5. A method for manufacturing a minting die suitable for the mintage of coins, medals and the like,
comprising a step of punching the body of the minting die (200) being formed, by a reproducing punch (100),
which body (200) has an axial direction of development (L) and a radial face (201) substantially orthogonal to said axial direction,
wherein in said punching step the reproducing punch abuts at the transversal face (201) of the body of the minting die (200) being formed in order to transfer upon said face an effigy (10),
wherein in said punching step both an axial and radial deformation of the body of the minting die (200) being formed is allowed, so that the final curvature of the minting die is determined by such axial and radial deformation,
wherein said punching step is performed by containing the body of the minting die (200) being formed within a containment seat (2) of a holding device(1),
which containment seat (2) is defined by an interface surface (3) generally in contact, in use, with the body (200) of the minting die being formed,
which interface surface (3) comprises at least one shaped region (4) defining one or more recesses (41) which, in use, are not in contact with the body of the minting die (200) being formed so as to allow both an axial and a radial deformation of the body itself (200) so that the final curvature of the minting die is determined by such axial and radial deformation.

6. The method according to the preceding claim, which is carried by a device or an apparatus according to anyone of the claims 1 to 4.

## Patentansprüche

1. Haltevorrichtung (1) zum Halten des Körpers eines Prägestempels (200), der für das Prägen von Münzen, Medaillen und dergleichen gebildet ist,
wobei der Körper (200) eine axiale Richtung (L) der Entwicklung und eine radiale Fläche (201) im Wesentlichen orthogonal zur axialen Richtung (L) aufweist, **dadurch gekennzeichnet, dass** die Haltevorrichtung (1) zur Verwendung bei einem Vorgang des Stanzens des Körpers des Prägestempels (200) geeignet ist, der durch eine Vervielfältigungsstanze (100) gebildet ist, die an der Querfläche (201) eines derartigen Körpers (200) anliegt, um auf die Fläche ein Abbild (10) zu übertragen, wobei an der Haltevorrichtung (1) ein Eingrenzungssitz (2) des Körpers des Prägestempels (200) gebildet ist, wobei letzterer (200) während des Stanzvorgangs in diesem Eingrenzungssitz (2) gehalten wird,
wobei der Eingrenzungssitz (2) durch eine Grenzfläche (3) definiert ist, die bei Gebrauch mit dem Körper (200) des Prägestempels, der gebildet wird, im Allgemeinen in Kontakt ist,
wobei die Grenzfläche (3) mindestens einen geformten Bereich (4) umfasst, der eine oder mehrere Ausnehmungen (41) definiert, die bei Gebrauch mit dem Körper des Prägestempels (200), der gebildet wird, nicht in Kontakt sind, um sowohl eine axiale als auch eine radiale Deformation des Körpers selbst (200) zu ermöglichen, so dass die endgültige Krümmung des Prägestempels durch eine derartige axiale und radiale Verformung bestimmt wird.

2. Vorrichtung (1) nach Anspruch 1, wobei der geformte Bereich (4) eine Vielzahl von Längsnuten (41) umfasst.

3. Vorrichtung (1) nach Anspruch 1 oder 2, wobei der geformte Bereich (4) eine Vielzahl von Ausnehmungen, vorzugsweise mit gekrümmtem Profil, umfasst.

4. Vorrichtung (20) zur Herstellung eines Prägestempels, die eine Vorrichtung (1) nach einem der vorhergehenden Ansprüche und eine Vervielfältigungsstanze (100) umfasst, die ein Abbild (10) trägt, das auf den Körper des Prägestempels (200), der gebildet wird, übertragen werden soll.

5. Verfahren zur Herstellung eines Prägestempels, der zum Prägen von Münzen, Medaillen und dergleichen geeignet ist,
wobei das Verfahren einen Schritt des Stanzens des Körpers des Prägestempels (200), der durch eine Vervielfältigungsstanze (100) gebildet wird, umfasst,
wobei der Körper (200) eine axiale Richtung der Entwicklung (L) und eine radiale Fläche (201) im Wesentlichen orthogonal zu der axialen Richtung aufweist,
wobei die Vervielfältigungsstanze bei dem Stanzschritt an der Querfläche (201) des Körpers des Prägestempels (200), der gebildet wird, anliegt, um auf die Fläche ein Abbild (10) zu übertragen,
wobei bei dem Stanzschritt sowohl eine axiale als auch eine radiale Verformung des Körpers des Prägestempels (200), der gebildet wird, erlaubt ist, so dass die endgültige Krümmung des Prägestempels durch eine derartige axiale und radiale Verformung bestimmt wird,
wobei der Stanzschritt dadurch ausgeführt wird, dass der Körper des Prägestempels (200), der gebildet wird, in einem Eingrenzungssitz (2) einer Haltevorrichtung (1) gehalten wird,
wobei der Eingrenzungssitz (2) durch eine Grenzfläche (3) definiert wird, die bei Gebrauch mit dem Körper (200) des Prägestempels, der gebildet wird, im Allgemeinen in Kontakt ist,
wobei die Grenzfläche (3) mindestens einen geformten Bereich (4) umfasst, der eine oder mehrere Ausnehmungen (41) definiert, die bei Gebrauch mit dem Körper des Prägestempels (200), der gebildet wird, nicht in Kontakt sind, um sowohl eine axiale als auch eine radiale Deformation des Körpers selbst (200) zu ermöglichen, so dass die endgültige Krümmung des Prägestempels durch eine derartige axiale und radiale Verformung bestimmt wird.

6. Verfahren nach dem vorhergehenden Anspruch, das durch eine Vorrichtung oder ein Gerät nach einem der Ansprüche 1 bis 4 ausgeführt wird.

## Revendications

1. Dispositif de confinement (1) pour confiner le corps d'une matrice d'estampage (200) formée pour la frappe de pièces de monnaie, de médailles et analogues,
lequel corps (200) a une direction axiale (L) de développement et une face radiale (201) sensiblement orthogonale à ladite direction axiale (L),
**caractérisé en ce que** ledit dispositif de confinement (1) convient à un usage dans une opération de poinçonnage, le corps de la matrice d'estampage (200) étant formé par un poinçon de reproduction (100) qui s'aboute sur la face transversale (201) dudit corps (200) afin de transférer sur ladite face une effigie (10),
lequel dispositif de confinement (1) présente un siège de confinement (2) du corps de la matrice d'estampage (200) qui est formé, à l'intérieur duquel siège de confinement (2) cette dernière (200) est maintenue au cours de l'opération de poinçonnage, lequel siège de confinement (2) est défini par une surface d'interface (3) généralement en contact, en service, avec le corps (200) de la matrice d'estampage qui y est formé,
laquelle surface d'interface (3) comprend au moins une région moulée (4) définissant une ou plusieurs cavités (41) qui, en service, ne sont pas en contact avec le corps de la matrice d'estampage (200) qui y est formé de manière à permettre une déformation à la fois axiale et radiale du corps lui-même (200) en sorte que la courbure finale de la matrice d'estampage soit déterminée par cette déformation axiale et radiale.

2. Dispositif (1) selon la revendication 1, dans lequel ladite région moulée (4) comprend une pluralité de rainures longitudinales (41).

3. Dispositif (1) selon la revendication 1 ou 2, dans lequel ladite région moulée (4) comprend une pluralité de cavités, de préférence de profil curviligne.

4. Appareil (20) pour la fabrication d'une matrice d'estampage, comprenant un dispositif (1) selon l'une quelconque des revendications précédentes et un poinçon de reproduction (100) portant une effigie (10) à transférer sur le corps de la matrice d'estampage (200) qui y est formé.

5. Procédé de fabrication d'une matrice d'estampage pour la frappe de pièces de monnaie, de médailles et analogues,
comprenant une étape de poinçonnage du corps de la matrice d'estampage (200) qui y est formé par un poinçon de reproduction (100),
lequel corps (200) a une direction axiale de développement (L) et une face radiale (201) sensiblement orthogonale à ladite direction axiale,
dans lequel, à ladite étape de poinçonnage, le poinçon de reproduction s'aboute sur la face transversale (201) dudit corps de la matrice d'estampage (200) qui y est formé afin de transférer sur ladite face une effigie (10),
dans lequel, à ladite étape de poinçonnage, à la fois une déformation axiale et radiale du corps de la matrice d'estampage (200) qui y est formé est autorisée en sorte que la courbure finale de la matrice d'estampage soit déterminée par cette déformation axiale et radiale,
dans lequel ladite étape de poinçonnage est effectuée en confinant le corps de la matrice d'estampage (200) qui y est formé dans un siège de confinement (2) d'un dispositif de confinement (1), lequel siège de confinement (2) est défini par une surface d'interface (3) généralement en contact, en service, avec le corps (200) de la matrice d'estampage qui y est formé,
laquelle surface d'interface (3) comprend au moins une région moulée (4) définissant une ou plusieurs cavités (41) qui, en service, ne sont pas en contact avec le corps de la matrice d'estampage (200) qui y est formé de manière à permettre une déformation à la fois axiale et radiale du corps lui-même (200) en sorte que la courbure finale de la matrice d'estampage soit déterminée par cette déformation axiale et radiale.

6. Procédé selon la revendication précédente, qui est effectué selon l'une quelconque des revendications 1 à 4.
